(19) Europäisches Patentamt / European Patent Office / Office européen des brevets

(11) **EP 4 625 896 A1**

(12) **EUROPEAN PATENT APPLICATION**
published in accordance with Art. 153(4) EPC

(43) Date of publication:
**01.10.2025 Bulletin 2025/40**

(21) Application number: **23919010.1**

(22) Date of filing: **31.01.2023**

(51) International Patent Classification (IPC):
**H04L 25/02** (2006.01)

(52) Cooperative Patent Classification (CPC):
**H04L 25/02**

(86) International application number:
**PCT/CN2023/074044**

(87) International publication number:
**WO 2024/159430 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• **MA, Qianli**
  **Shenzhen, Guangdong 518129 (CN)**
• **QU, Huiyang**
  **Shenzhen, Guangdong 518129 (CN)**
• **HUANG, Huang**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **COMMUNICATION METHOD AND RELATED APPARATUS**

(57) A communication method and a related apparatus are provided. The method includes: obtaining a placement period X of reference signals, and a position $Y_i$, within an $i^{th}$ time unit, of a 1st reference signal in the $i^{th}$ time unit, where X is an integer greater than 0, i={0, 1, 2, ..., N-1}, and N is an integer greater than 1; placing $a_i$ reference signals in the $i^{th}$ time unit based on the placement period X and the position $Y_i$, where $a_i$ is an integer greater than 1, and an interval between a last reference signal in a previous time unit and a 1st reference signal in a subsequent time unit of any adjacent time units in N time units is X; and outputting N first time-domain signals corresponding to the N time units, where the N first time-domain signals include reference signals in the N time units. According to the method in this application, channel estimation effect in a high-speed scenario can be improved.

First device

S601: Obtain a placement period X of reference signals, and a position $Y_i$, within an $i^{th}$ time unit, of a 1st reference signal in the $i^{th}$ time unit

S602: Place a reference signals in the $i^{th}$ time unit based on the placement period X and the position $Y_i$

S603: Output N first time-domain signals corresponding to N time units

Second device

FIG. 6

**Description**

**TECHNICAL FIELD**

This application relates to the field of communication technologies, and in particular, to a communication method and a related apparatus.

**BACKGROUND**

After transmission from a transmit end, data travels through a radio channel to reach a receive end; various interfering factors within the radio channel can impact the transmitted data, resulting in significant differences between the data sent by the transmit end and data received by the receive end. Usually, channel estimation needs to be performed for equalization processing on the received data, to eliminate the impact of the channel and recover the data. Currently, a reference signal known to the receive end is usually transmitted while a data signal is transmitted. The receive end estimates, based on the received reference signal and the known reference signal, a channel response experienced by the reference signal, to obtain a channel response for the data signal.

In related technologies, to improve channel estimation performance of discrete Fourier transform-spread-orthogonal frequency division multiplexing (discrete Fourier transform-spread-orthogonal frequency division multiplexing, DFT-S-OFDM) in a high-speed environment, a pre-Fourier transform-demodulation reference signal (pre-discrete Fourier transform-demodulation reference signal, pre-DFT-DMRS) scheme is proposed. To be specific, the transmit end inserts a DMRS with a virtual cyclic prefix (cyclic prefix, CP) into each time unit in data domain, and then the entire time unit is processed according to a single-carrier sending procedure to obtain a time-domain signal for transmission. However, channel estimation effect of this scheme in a high-speed scenario is still not good enough. Therefore, how to improve the channel estimation effect in the high-speed scenario becomes an urgent problem to be resolved currently.

**SUMMARY**

This application provides a communication method and a related apparatus to help improve channel estimation effect in a high-speed scenario.

According to a first aspect, this application provides a communication method. The method includes: obtaining a placement period X of reference signals, and a position $Y_i$, within an $i^{th}$ time unit, of a 1st reference signal in the $i^{th}$ time unit, where X is an integer greater than 0, i={0, 1, 2, ..., N-1}, and N is an integer greater than 1; placing $a_i$ reference signals in the $i^{th}$ time unit based on the placement period X and the position $Y_i$, where $a_i$ is an integer greater than 1, and an interval between a last reference signal in a previous time unit and a 1st reference signal in a subsequent time unit of any adjacent time units in N time units is X; and outputting N first time-domain signals corresponding to the N time units, where the N first time-domain signals include reference signals in the N time units.

In an embodiment of this application, the time unit may be a symbol, and the reference signal may be a DMRS. Channel estimation performance in a high-speed moving scenario can be effectively improved by increasing density of reference signals in each time unit (that is, $a_i$>1) and ensuring that an interval between adjacent reference signals is a fixed value (that is, X).

In a possible implementation, before the N first time-domain signals corresponding to the N time units are output, cyclic shift may be further performed on corresponding second time-domain signals in N-1 time units following a zeroth time unit, to obtain N-1 third time-domain signals, where a cyclic shift length $U_i$ of the $i^{th}$ time unit is determined based on a cyclic shift length $U_{i-1}$ of an $(i-1)^{th}$ time unit and a transmission resource quantity $N_{RE}$; and further, the N first time-domain signals are generated based on a second time-domain signal corresponding to the zeroth time unit and the N-1 third time-domain signals.

In this implementation, considering that generation of a time-domain signal is followed by an operation of adding a CP to each time unit, after the CP is added, an interval between a 1st reference signal in a subsequent time unit and a last reference signal in a previous time unit is increased by a CP interval, and it is difficult to ensure that an interval between reference signals crossing time units is the same as an interval between other reference signals not crossing time units. Therefore, a time-domain cyclic shift may be performed on the subsequent time unit to ensure that adjacent reference signals have an equal interval.

In a possible implementation, the cyclic shift length $U_i$ of the $i^{th}$ time unit is further determined based on a length $L_{CP\_i}$ of the $i^{th}$ time unit and a quantity $a_{i-1}$ of reference signals in the $(i-1)^{th}$ time unit.

In a possible implementation, when i=0, a cyclic shift length $U_0$ of the zeroth time unit is 0, or no cyclic shift is performed on the zeroth time unit.

In a possible implementation, when i>0, the cyclic shift length $U_i$ of the $i^{th}$ time unit satisfies:

$$U_i=(N_{RE}-Y_{i-1}-a_{i-1}X+Y_i)*FFTsize/N_{RE}+L_{CP\_i}+U_{i-1},$$

where $U_i$ represents the cyclic shift length of the $i^{th}$ time unit, $N_{RE}$ represents the transmission resource quantity, $Y_{i-1}$ is an offset value of a $1^{st}$ reference signal in the $(i-1)^{th}$ time unit relative to a start position of the $(i-1)^{th}$ time unit, $a_{i-1}$ represents the quantity of reference signals in the $(i-1)^{th}$ time unit, X represents the placement period of the reference signals, $Y_i$ is an offset value of the $1^{st}$ reference signal in the $i^{th}$ time unit relative to a start position of the $i^{th}$ time unit, FFTsize represents a Fourier transform length, $L_{CP\_i}$ represents a CP length of the $i^{th}$ time unit, and $U_{i-1}$ represents the cyclic shift length of the $(i-1)^{th}$ time unit.

In a possible implementation, the generating the N first time-domain signals based on the second time-domain signal corresponding to the zeroth time unit and the N-1 third time-domain signals includes: adding a first CP to the second time-domain signal corresponding to the zeroth time unit to obtain a first time-domain signal corresponding to the zeroth time unit; and adding a second CP to the corresponding third time-domain signals in the N-1 time units to obtain N-1 first time-domain signals.

In this implementation, after a cyclic shift is performed, a CP needs to be added to a signal obtained through the cyclic shift. In this case, the added CP is last CP signals of the signal obtained through the cyclic shift. For a signal on which no cyclic shift needs to be performed, a CP added to the signal is last CP signals of the signal on which no cyclic shift is performed.

In a possible implementation, obtaining the placement period X of the reference signals, and the position $Y_i$, within the $i^{th}$ time unit, of the $1^{st}$ reference signal in the $i^{th}$ time unit includes: receiving first indication information, where the first indication information indicates X and $Y_i$.

In this implementation, the placement period X of the reference signals, and the position $Y_i$, within the $i^{th}$ time unit, of the $1^{st}$ reference signal in the $i^{th}$ time unit may be delivered by a second device (for example, the second device is an access network device) to a first device. Optionally, when the first device is a high-performance terminal device, the placement period X of the reference signals, and the position $Y_i$, within the $i^{th}$ time unit, of the $1^{st}$ reference signal in the $i^{th}$ time unit may also be determined by the first device. Optionally, the placement period X of the reference signals, and the position $Y_i$, within the $i^{th}$ time unit, of the $1^{st}$ reference signal in the $i^{th}$ time unit may also be preconfigured, predefined, or the like. This is not limited herein.

In a possible implementation, information about a quantity of reference signals included in the $i^{th}$ time unit may also be obtained, where the quantity of reference signals is $a_i$.

In a possible implementation, the time unit may be a symbol.

According to a second aspect, this application provides a communication method. The method includes: receiving N first time-domain signals corresponding to N time units, where the N first time-domain signals include reference signals in the N time units, a first time-domain signal corresponding to an $i^{th}$ time unit is determined based on the $i^{th}$ time unit in which $a_i$ reference signals have been placed, and positions in which the $a_i$ reference signals are placed in the $i^{th}$ time unit are determined based on a placement period X of the reference signals, and a position $Y_i$, within the $i^{th}$ time unit, of a $1^{st}$ reference signal in the $i^{th}$ time unit, where X is an integer greater than 0, i={0, 2, ..., N-1}, N is an integer greater than 1, $a_i$ is an integer greater than 1, and an interval between a last reference signal in a previous time unit and a $1^{st}$ reference signal in a subsequent time unit of any adjacent time units in the N time units is X; and performing channel estimation based on the reference signals in the N first time-domain signals.

In a possible implementation, before channel estimation is performed based on the reference signals in the N first time-domain signals, the reference signals may be further extracted from the N first time-domain signals based on the placement period X of the reference signals, the position $Y_i$, within the $i^{th}$ time unit, of the $1^{st}$ reference signal in the $i^{th}$ time unit, and a cyclic shift length $U_i$ of the $i^{th}$ time unit.

In a possible implementation, the cyclic shift length $U_i$ of the $i^{th}$ time unit is further determined based on a length $L_{CP\_i}$ of the $i^{th}$ time unit and a quantity $a_{i-1}$ of reference signals in an $(i-1)^{th}$ time unit.

In a possible implementation, when i=0, a cyclic shift length $U_0$ of a zeroth time unit is 0, or no cyclic shift is performed on a zeroth time unit.

In a possible implementation, when i>0, the cyclic shift length $U_i$ of the $i^{th}$ time unit satisfies: $U_i=(N_{RE}-Y_{i-1}-a_{i-1}X+Y_i)*FFTsize/N_{RE}+L_{CP\_i}+U_{i-1}$, where $U_i$ represents the cyclic shift length of the $i^{th}$ time unit, $N_{RE}$ represents a transmission resource quantity, $Y_{i-1}$ is an offset value of a $1^{st}$ reference signal in the $(i-1)^{th}$ time unit relative to a start position of the $(i-1)^{th}$ time unit, $a_{i-1}$ represents the quantity of reference signals in the $(i-1)^{th}$ time unit, X represents the placement period of the reference signals, $Y_i$ is an offset value of the $1^{st}$ reference signal in the $i^{th}$ time unit relative to a start position of the $i^{th}$ time unit, FFTsize represents a Fourier transform length, $L_{CP\_i}$ represents a CP length of the $i^{th}$ time unit, and $U_{i-1}$ represents a cyclic shift length of the $(i-1)^{th}$ time unit.

In a possible implementation, first indication information may also be sent, where the first indication information indicates X and $Y_i$.

In a possible implementation, the time unit is a symbol.

According to a third aspect, this application provides a communication apparatus. The apparatus includes: a transceiver unit, configured to obtain a placement period X of reference signals, and a position $Y_i$, within an $i^{th}$ time unit, of a $1^{st}$ reference signal in the $i^{th}$ time unit, where X is an integer greater than 0, i={0, 1, 2, ..., N-1}, and N is an integer greater than 1; and a processing unit, configured to place $a_i$ reference signals in the $i^{th}$ time unit based on the placement period X and the position $Y_i$, where $a_i$ is an integer greater than 1, and an interval between a last reference signal in a previous time unit and a $1^{st}$ reference signal in a subsequent time unit of any adjacent time units in N time units is X, where the processing unit is further configured to output N first time-domain signals corresponding to the N time units, where the N first time-domain signals include reference signals in the N time units.

In a possible implementation, before the outputting the N first time-domain signals corresponding to the N time units, the processing unit is further configured to: perform cyclic shift on corresponding second time-domain signals in N-1 time units following a zeroth time unit, to obtain N-1 third time-domain signals, where a cyclic shift length $U_i$ of the $i^{th}$ time unit is determined based on a cyclic shift length $U_{i-1}$ of an $(i-1)^{th}$ time unit and a transmission resource quantity $N_{RE}$; and further, the processing unit may further generate the N first time-domain signals based on a second time-domain signal corresponding to the zeroth time unit and the N-1 third time-domain signals.

In a possible implementation, the cyclic shift length $U_i$ of the $i^{th}$ time unit is further determined based on a length $L_{CP\_i}$ of the $i^{th}$ time unit and a quantity $a_{i-1}$ of reference signals in the $(i-1)^{th}$ time unit.

In a possible implementation, when i=0, a cyclic shift length $U_0$ of the zeroth time unit is 0, or no cyclic shift is performed on the zeroth time unit.

In a possible implementation, when i>0, the cyclic shift length $U_i$ of the $i^{th}$ time unit satisfies: $U_i=(N_{RE}-Y_{i-1}-a_{i-1}X+Y_i)$*FFTsize/$N_{RE}+L_{CP\_i}+U_{i-1}$, where $U_i$ represents the cyclic shift length of the $i^{th}$ time unit, $N_{RE}$ represents the transmission resource quantity, $Y_{i-1}$ is an offset value of a $1^{st}$ reference signal in the $(i-1)^{th}$ time unit relative to a start position of the $(i-1)^{th}$ time unit, $a_{i-1}$ represents the quantity of reference signals in the $(i-1)^{th}$ time unit, X represents the placement period of the reference signals, $Y_i$ is an offset value of the $1^{st}$ reference signal in the $i^{th}$ time unit relative to a start position of the $i^{th}$ time unit, FFTsize represents a Fourier transform length, $L_{CP\_i}$ represents a CP length of the $i^{th}$ time unit, and $U_{i-1}$ represents the cyclic shift length of the $(i-1)^{th}$ time unit.

In a possible implementation, when generating the N first time-domain signals based on the second time-domain signal corresponding to the zeroth time unit and the N-1 third time-domain signals, the processing unit is specifically configured to: add a first CP to the second time-domain signal corresponding to the zeroth time unit to obtain a first time-domain signal corresponding to the zeroth time unit; and add a second CP to the corresponding third time-domain signals in the N-1 time units to obtain N-1 first time-domain signals.

In a possible implementation, when obtaining the placement period X of the reference signals, and the position $Y_i$, within the $i^{th}$ time unit, of the $1^{st}$ reference signal in the $i^{th}$ time unit, the transceiver unit is configured to: receive first indication information, where the first indication information indicates X and $Y_i$.

In a possible implementation, the processing unit is further configured to: obtain information about a quantity of reference signals included in the $i^{th}$ time unit, where the quantity of reference signals is $a_i$.

In a possible implementation, the time unit is a symbol.

According to a fourth aspect, this application provides a communication apparatus. The apparatus includes: a transceiver unit, configured to receive N first time-domain signals corresponding to N time units, where the N first time-domain signals include reference signals in the N time units, a first time-domain signal corresponding to an $i^{th}$ time unit is determined based on the $i^{th}$ time unit in which $a_i$ reference signals have been placed, and positions in which the $a_i$ reference signals are placed in the $i^{th}$ time unit are determined based on a placement period X of the reference signals, and a position $Y_i$, within the $i^{th}$ time unit, of a $1^{st}$ reference signal in the $i^{th}$ time unit, where X is an integer greater than 0, i={0, 2, ..., N-1}, N is an integer greater than 1, $a_i$ is an integer greater than 1, and an interval between a last reference signal in a previous time unit and a $1^{st}$ reference signal in a subsequent time unit of any adjacent time units in the N time units is X; and a processing unit, configured to perform channel estimation based on the reference signals in the N first time-domain signals.

In a possible implementation, before performing channel estimation based on the reference signals in the N first time-domain signals, the processing unit is further configured to: extract the reference signals from the N first time-domain signals based on the placement period X of the reference signals, the position $Y_i$, within the $i^{th}$ time unit, of the $1^{st}$ reference signal in the $i^{th}$ time unit, and a cyclic shift length $U_i$ of the $i^{th}$ time unit.

In a possible implementation, the cyclic shift length $U_i$ of the $i^{th}$ time unit is further determined based on a length $L_{CP\_i}$ of the $i^{th}$ time unit and a quantity $a_{i-1}$ of reference signals in an $(i-1)^{th}$ time unit.

In a possible implementation, when i=0, a cyclic shift length $U_0$ of a zeroth time unit is 0, or no cyclic shift is performed on a zeroth time unit.

In a possible implementation, when i>0, the cyclic shift length $U_i$ of the $i^{th}$ time unit satisfies: $U_i=(N_{RE}-Y_{i-1}-a_{i-1}X+Y_i)$*FFTsize/$N_{RE}+L_{CP\_i}+U_{i-1}$, where $U_i$ represents the cyclic shift length of the $i^{th}$ time unit, $N_{RE}$ represents a transmission resource quantity, $Y_{i-1}$ is an offset value of a $1^{st}$ reference signal in the $(i-1)^{th}$ time unit relative to a start position of the $(i-1)^{th}$ time unit, $a_{i-1}$ represents the quantity of reference signals in the $(i-1)^{th}$ time unit, X represents the placement period of the reference signals, $Y_i$ is an offset value of the $1^{st}$ reference signal in the $i^{th}$ time unit relative to a start position of the $i^{th}$ time unit, FFTsize represents a Fourier transform length, $L_{CP\_i}$ represents a CP length of the $i^{th}$ time unit, and $U_{i-1}$ represents a

cyclic shift length of the $(i-1)^{th}$ time unit.

In a possible implementation, the transceiver unit is further configured to: send first indication information, where the first indication information indicates X and $Y_i$.

In a possible implementation, the time unit is a symbol.

According to a fifth aspect, this application provides a communication apparatus. The communication apparatus includes a processor, a transceiver, and a memory, where the processor, the transceiver, and the memory are coupled; the memory stores a computer program; and the processor and the transceiver are configured to invoke the computer program in the memory, so that the communication apparatus performs the method according to any one of the first aspect.

According to a sixth aspect, this application provides a communication apparatus. The communication apparatus includes a processor, a transceiver, and a memory, where the processor, the transceiver, and the memory are coupled; the memory stores a computer program; and the processor and the transceiver are configured to invoke the computer program in the memory, so that the communication apparatus performs the method according to any one of the second aspect.

According to a seventh aspect, this application provides a chip or a chip system, including an input/output interface and a processing circuit, where the input/output interface is configured to exchange information or data, and the processing circuit is configured to enable, by using a logical circuit or running instructions, an apparatus in which the chip or the chip system is installed to perform the method according to any one of the first aspect.

According to an eighth aspect, this application provides a chip or a chip system, including an input/output interface and a processing circuit, where the input/output interface is configured to exchange information or data, and the processing circuit is configured to enable, by using a logical circuit or running instructions, an apparatus in which the chip or the chip system is installed to perform the method according to any one of the second aspect.

According to a ninth aspect, this application provides a computer-readable storage medium, where the storage medium stores a computer program or instructions, and when the computer program or instructions are executed by a computer, the method according to any one of the first aspect is implemented.

According to a tenth aspect, this application provides a computer-readable storage medium, where the storage medium stores a computer program or instructions, and when the computer program or instructions are executed by a computer, the method according to any one of the second aspect is implemented.

According to an eleventh aspect, this application provides a computer program product, where when a computer reads and executes the computer program product, the computer is enabled to perform the method according to any one of the first aspect.

According to a twelfth aspect, this application provides a computer program product, where when a computer reads and executes the computer program product, the computer is enabled to perform the method according to any one of the second aspect.

According to a thirteenth aspect, this application provides a communication system, where the communication system includes the communication apparatus according to the third aspect or the fifth aspect, and the communication apparatus according to the fourth aspect or the sixth aspect.

## BRIEF DESCRIPTION OF DRAWINGS

FIG. 1 is a diagram of a network architecture of a communication system;
FIG. 2 is a diagram of a structure of a transmitter for implementing a single carrier by using multiple carriers;
FIG. 3 is a schematic flowchart for generating a CP-DFT-S-OFDM waveform;
FIG. 4 is a diagram of a time-domain structure of a symbol to which a CP is added in a CP-DFT-S-OFDM waveform;
FIG. 5 is a diagram of a time-domain structure of a symbol of a pre-DFT-DMRS;
FIG. 6 is an interaction diagram of a communication method according to an embodiment of this application;
FIG. 7 is a diagram of a scenario in which reference signals are placed in time units according to an embodiment of this application;
FIG. 8 is a diagram of another scenario in which reference signals are placed in time units according to an embodiment of this application;
FIG. 9 is a diagram of a scenario in which cyclic shift is performed on time-domain signals according to an embodiment of this application;
FIG. 10 is a diagram of a structure of a communication apparatus according to an embodiment of this application;
FIG. 11 is a diagram of a structure of another communication apparatus according to an embodiment of this application;
FIG. 12 is a diagram of a structure of another communication apparatus according to an embodiment of this application; and
FIG. 13 is a diagram of a structure of another communication apparatus according to an embodiment of this application.

## DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may mean A or B. The term "and/or" in this specification describes only an association relationship between associated objects and represents that three relationships may exist. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, the term "example", "for example", or the like is used to represent an example, an illustration, or a description. Any embodiment or design scheme described with "example" or "for example" in this application should not be construed as being more preferred or advantageous than another embodiment or design scheme. To be precise, use of the term such as "example" or "for example" is intended to present a relative concept in a specific manner.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system such as a new radio (new radio, NR) system, a system evolved after 5G such as a 6th generation (6th generation, 6G) system, and a wireless local area network (Wireless Local Area Network, WLAN). This is not limited herein.

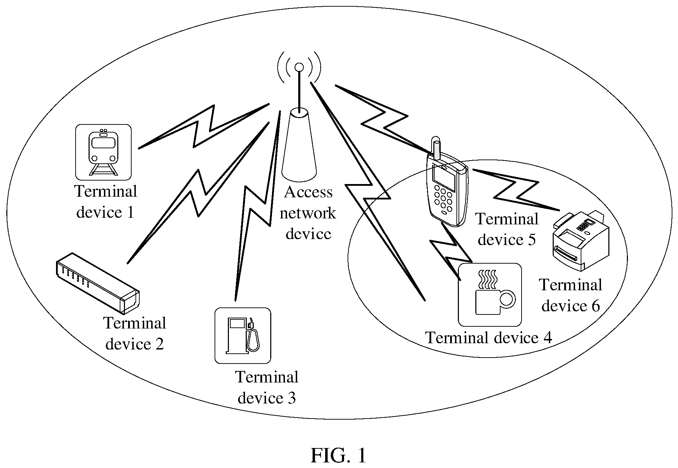

For example, FIG. 1 is a diagram of a structure of a communication system according to an embodiment of this application. As shown in FIG. 1, an access network device and a terminal device 1 to a terminal device 6 form a communication system. In the communication system, the terminal device 1 to the terminal device 6 may send uplink information to the access network device, and the access network device may also send downlink information to the terminal device 1 to the terminal device 6. In addition, the terminal device 4 to the terminal device 6 may also form a communication system. In the communication system, the access network device may send downlink information to the terminal device 1, the terminal device 2, the terminal device 3, the terminal device 5, and the like. The terminal device 5 may also send downlink information to the terminal device 4 and the terminal device 6. The terminal device 4 and the terminal device 6 may also send uplink information to the access network device via the terminal device 5.

The terminal device in embodiments of this application may be a device having a wireless transceiver function, and may be specifically user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, a machine-type communication device, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a communication device carried on a high-altitude aircraft, a wearable device, an unmanned aerial vehicle, a robot, a smart point of sale (point of sale, POS) machine, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In embodiments of this application, an apparatus configured to implement a function of the terminal device may be a terminal device, or may be an apparatus that can support the terminal device in implementing the function, for example, a chip system. The apparatus may be mounted in a terminal device or used in combination with a terminal device. In embodiments of this application, the chip system may include a chip or may include a chip and another discrete component.

The access network device in embodiments of this application may be a device having a wireless transceiver function, and is configured to perform communication with the terminal device, or may be a device that connects the terminal device to a wireless network. The network device may be a node in a radio access network, and may also be referred to as a base station, or may be referred to as a radio access network (radio access network, RAN) node (or device). The network device may be an evolved NodeB (evolved NodeB, eNB or eNodeB) in LTE, a next generation NodeB (next generation NodeB, gNB) in a 5G network or a base station in a future evolved public land mobile network (public land mobile network, PLMN), a broadband network gateway (broadband network gateway, BNG), an aggregation switch or a non-3rd Generation Partnership Project (3rd Generation Partnership Project, 3GPP) access device, or the like. Optionally, the network device in embodiments of this application may include base stations in various forms, for example, a macro base station, a micro base station (also referred to as a small cell), a relay station, an access point, a device for implementing a base station function in a communication system evolved after 5G, an access point (access point, AP) in a Wi-Fi system, a transmitting and receiving point (transmitting and receiving point, TRP), a transmitting point (transmitting point, TP), a mobile switching center, and a device that undertakes a base station function in device-to-device (Device-to-Device, D2D), vehicle-to-everything (vehicle-to-everything, V2X), and machine-to-machine (machine-to-machine, M2M) communication, and may further include a central unit (central unit, CU) and a distributed unit (distributed unit, DU) in a cloud radio access network (cloud radio access network, C-RAN) system, and a network device in a non-terrestrial network (non-terrestrial network, NTN) communication system, that is, may be deployed on a high-altitude platform or a satellite. This is not limited in embodiments of this application.

The access network device may communicate and interact with a core network device, to provide a communication service for the terminal device. The core network device is, for example, a device in a 5G network core network (core network, CN). As a bearer network, the core network provides an interface for a data network, provides communication connection, authentication, management, and policy control for a terminal, bears a data service, and the like.

In embodiments of this application, an apparatus configured to implement a function of the access network device may be an access network device, or may be an apparatus that can support the access network device in implementing the function, for example, a chip system. The apparatus may be mounted in an access network device or used in combination with an access network device.

It should be noted that the first device described in subsequent embodiments of this application may be an access network device, and the second device may be a terminal device; or the first device may be a terminal device, and the second device may be an access network device, or the like. This is specifically determined based on an actual scenario, and is not limited herein. For ease of description, in embodiments of this application, an example in which the first device is a terminal device and the second device is an access network device is mainly used for description.

To facilitate understanding of related content in embodiments of this application, the following describes some knowledge needed in the solutions in this application. It should be noted that these explanations are intended to make embodiments of this application easier to understand, but should not be considered as any limitation on the protection scope claimed in this application.

1. Single carrier

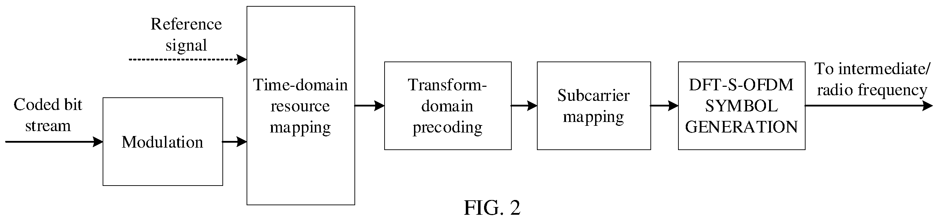

Single carrier is a technology of making serially arranged to-be-transmitted signals by using a roll-off filter through convolution to form to-be-transmitted signals. Single carrier-quadrature amplitude modulation (single carrier-quadrature amplitude modulation, SC-QAM) is a conventional single-carrier waveform. In addition, there is a method for implementing a single-carrier waveform by using multiple carriers, which is referred to as discrete Fourier transform-spread-orthogonal frequency division multiplexing (discrete Fourier transform-spread-orthogonal frequency division multiplexing, DFT-S-OFDM). For example, FIG. 2 is a diagram of a structure of a transmitter for implementing a single carrier by using multiple carriers. As shown in FIG. 2, the transmitter includes a modulation module, a time-domain resource mapping module, a transform-domain precoding module, a subcarrier mapping module, and a DFT-S-OFDM symbol generation module.

2. Cyclic prefix (cyclic prefix, CP)

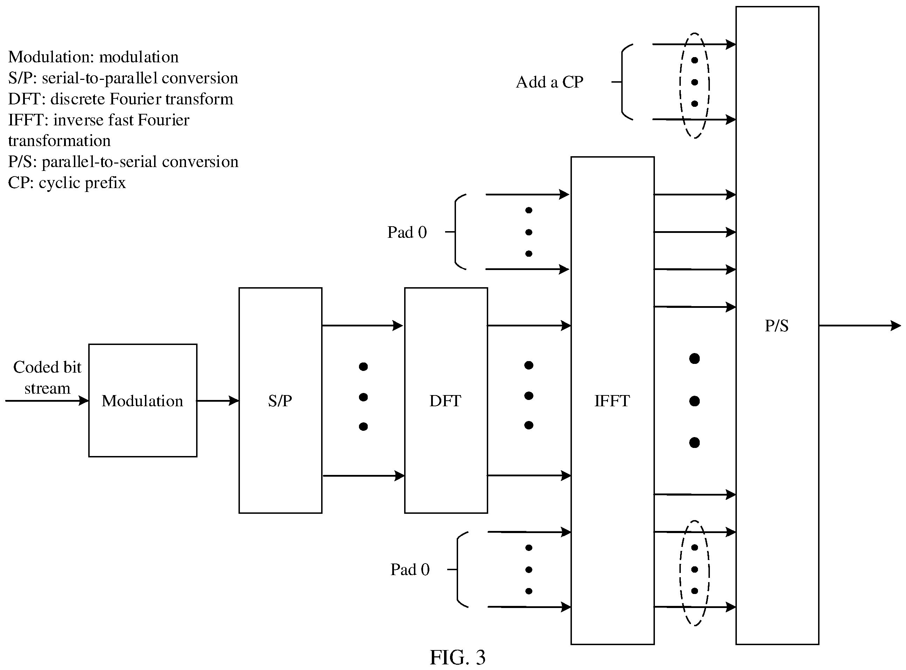

A DFT-S-OFDM waveform may use a CP as a guard interval. Steps of adding the CP to the DFT-S-OFDM waveform are shown in FIG. 3. Last X sampling symbols of a generated DFT-S-OFDM symbol are copied to the front of the DFT-S-OFDM symbol.

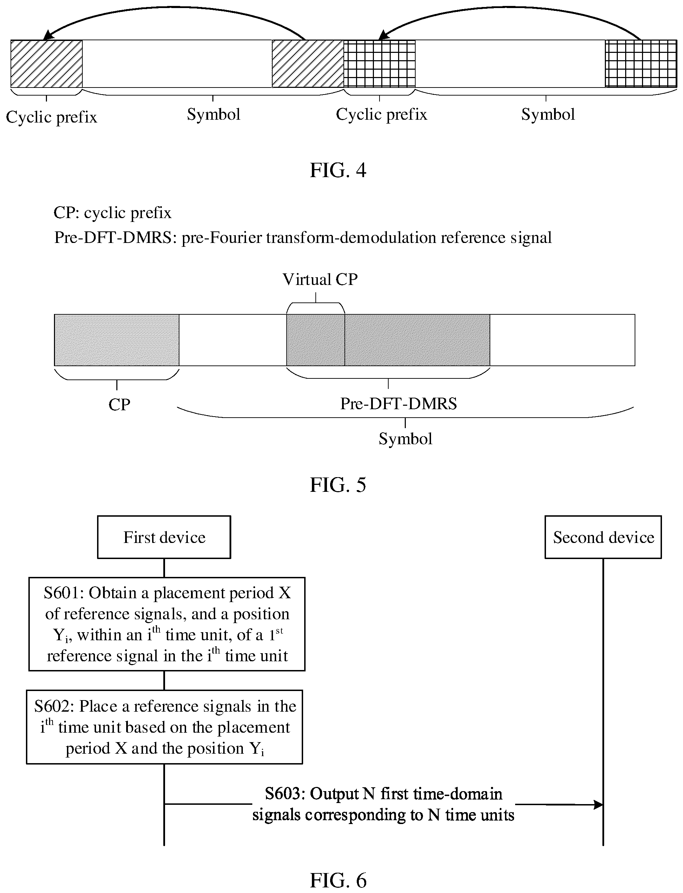

It may be understood that, for a CP-DFT-S-OFDM waveform, a time-domain structure of a symbol to which a CP is added is shown in FIG. 4.

Currently, a reference signal known to a receive end may be transmitted when a data signal is transmitted. Therefore, the receive end estimates, based on the received reference signal and the known reference signal, a channel response experienced by the reference signal, to obtain a channel response for the data signal. Usually, a reference signal used for uplink channel estimation may include a sounding reference signal (sounding reference signal, SRS), a demodulation reference signal (demodulation reference signal, DMRS), or the like, and a reference signal used for downlink channel estimation may include a channel state information reference signal (channel state information reference signal, CSI-RS), a DMRS, a cell-specific reference signal (cell-specific reference signal, CRS), or the like. In embodiments of this application, an example in which the reference signal is a DMRS is mainly used for description.

In a related technology, to improve channel estimation performance of DFT-S-OFDM in a high-speed environment, some companies propose a pre-DFT-DMRS scheme, which is to insert a DMRS into each symbol, so that a DMRS interval is shortened. As shown in FIG. 5, a known signal DMRS with a virtual CP is inserted in data domain, and then the entire symbol is processed according to a sending procedure for a single-carrier transmitter structure in FIG. 2 to obtain a final time-domain signal. It may be understood that the virtual CP is a repetition of last signals of the pre-DFT-DMRS and is placed in front to form a short CP. However, channel estimation effect of this scheme in a high-speed scenario is still not good enough. Therefore, how to improve the channel estimation effect in the high-speed scenario becomes an urgent problem to be resolved currently.

Based on this, this application provides a communication method and a related apparatus to help improve channel estimation effect in a high-speed scenario.

The following describes in detail the communication method and the communication apparatus provided in this application.

FIG. 6 is an interaction diagram of a communication method according to an embodiment of this application. As shown in FIG. 6, the communication method includes the following steps S601 to S603. The method shown in FIG. 6 may be performed by a first device and a second device. Alternatively, the method shown in FIG. 6 may be performed by a chip in a first device and a chip in a second device. It should be noted that FIG. 6 is a schematic flowchart of a method embodiment of this application, and shows detailed communication steps or operations of this method, but the steps or operations are merely examples. In embodiments of this application, other operations or variations of the operations in FIG. 6 may also be performed. In addition, the steps in FIG. 6 may be performed in an order different from that presented in FIG. 6, and it is possible that not all the operations in FIG. 6 need to be performed. In FIG. 6, an example in which the first device and the second device perform the method is mainly used for description.

S601: The first device obtains a placement period X of reference signals, and a position $Y_i$, within an $i^{th}$ time unit, of a $1^{st}$ reference signal in the $i^{th}$ time unit.

X is an integer greater than 0, i={0, 1, 2, ..., N-1}, and N is an integer greater than 1. In other words, the first device may obtain and traverse a position, within each of all N time units from i=0 to i=N-1, of a $1^{st}$ reference signal in each time unit. For example, for any time unit, for example, for the $i^{th}$ time unit, the position $Y_i$, within the $i^{th}$ time unit, of the $1^{st}$ reference signal in the $i^{th}$ time unit may be understood as an offset value of the $1^{st}$ reference signal in the $i^{th}$ time unit relative to a start position of the $i^{th}$ time unit. In another example, the position $Y_i$, within the $i^{th}$ time unit, of the $1^{st}$ reference signal in the $i^{th}$ time unit may also be understood as an offset value of the $1^{st}$ reference signal in the $i^{th}$ time unit relative to an end position of the $i^{th}$ time unit, or the like. This is not limited herein.

It should be noted that, in all the following embodiments of this application, the position $Y_i$, within the $i^{th}$ time unit, of the first reference $1^{st}$ reference signal in the $i^{th}$ time unit is understood by using an offset value relative to the start position of the $i^{th}$ time unit.

In some feasible implementations, that the first device obtains the placement period X of the reference signals, and the position $Y_i$, within the $i^{th}$ time unit, of the $1^{st}$ reference signal in the $i^{th}$ time unit may be understood as follows: The first device receives first indication information. For example, the first device receives the first indication information from the second device. The first indication information indicates the placement period X, and the position $Y_i$, within the $i^{th}$ time unit, of the $1^{st}$ reference signal in the $i^{th}$ time unit.

It may be understood that, unless otherwise specified, the first device described in this embodiment of this application is a terminal device, and the second device is an access network device. Optionally, when the first device is a high-performance terminal device, the first device may also determine the placement period X, and the position $Y_i$, within the $i^{th}$ time unit, of the $1^{st}$ reference signal in the $i^{th}$ time unit. Optionally, after the first device determines the placement period X, and the position $Y_i$, within the $i^{th}$ time unit, of the $1^{st}$ reference signal in the $i^{th}$ time unit, the first device may further send the placement period X, and the position $Y_i$, within the $i^{th}$ time unit, of the $1^{st}$ reference signal in the $i^{th}$ time unit to the second device, so that the second device decodes a received first time-domain signal based on the placement period X of the reference signals, and the position $Y_i$, within the $i^{th}$ time unit, of the $1^{st}$ reference signal in the $i^{th}$ time unit.

Optionally, the placement period X of the reference signals, and the position $Y_i$, within the $i^{th}$ time unit, of the $1^{st}$ reference signal in the $i^{th}$ time unit may also be predefined or preconfigured. This is not limited herein.

It may be understood that the position, within each of all the N time units, of the $1^{st}$ reference signal in each time unit in this embodiment of this application may be the same. Optionally, the position, within each of all the N time units, of the $1^{st}$ reference signal in each time unit may also be different. This is specifically determined based on an actual scenario and is not limited herein.

It may be understood that the time unit in this embodiment of this application may be specifically understood as a symbol. Optionally, the time unit may alternatively be understood as a slot, a subframe, a system frame, or the like. This is not limited herein.

S602: The first device places $a_i$ reference signals in the $i^{th}$ time unit based on the placement period X and the position $Y_i$.

In some feasible implementations, the first device obtains information about a quantity of reference signals included in the $i^{th}$ time unit, where the quantity of reference signals is $a_i$. $a_i$ is an integer greater than 1, and an interval between a last reference signal in a previous time unit and a 1st reference signal in a subsequent time unit of any adjacent time units in the N time units is X, and an interval between adjacent reference signals in a same time unit is also X. In other words, an interval between adjacent reference signals crossing time units is the same as an interval between adjacent reference signals not crossing time units, and both are X. For example, $a_i$=floor{$(N_{RE}-Y_i)/X$}, where floor{ } represents rounding down, and $N_{RE}$ is a transmission resource quantity. Further, the first device may place the $a_i$ reference signals in the $i^{th}$ time unit based on the placement period X and the position $Y_i$.

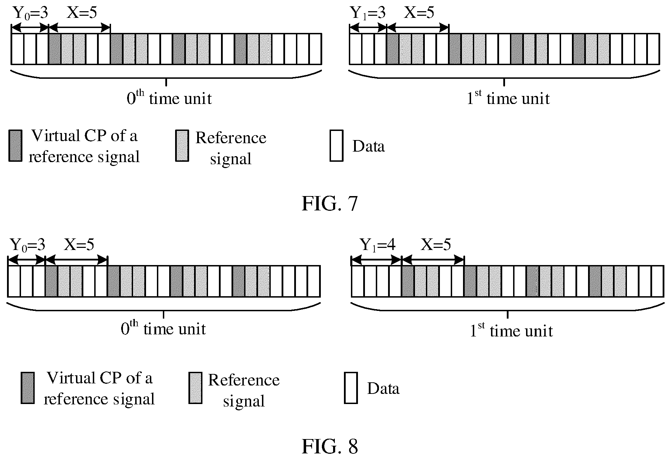

For example, FIG. 7 is a diagram of a scenario in which reference signals are placed in time units according to an embodiment of this application. As shown in FIG. 7, it is assumed that $N_{RE}$=25. A zeroth time unit and a first time unit are used as an example, where X=5, and $Y_0$=$Y_1$=3. Therefore, it may be determined that a quantity $a_0$ of reference signals in the zeroth time unit is 4, and that a quantity $a_1$ of reference signals in the first time unit is 4. Placement positions of the reference signals in the zeroth time unit and the reference signals in the first time unit are shown in FIG. 7.

For another example, FIG. 8 is a diagram of another scenario in which reference signals are placed in time units according to an embodiment of this application. As shown in FIG. 8, it is assumed that $N_{RE}$=25. A zeroth time unit and a first time unit are used as an example, where X=5, $Y_0$=3, and $Y_1$=4. Therefore, it may be determined that a quantity $a_0$ of reference signals in the zeroth time unit is 4, and that a quantity $a_1$ of reference signals in the first time unit is 4. Placement positions of the reference signals in the zeroth time unit and the reference signals in the first time unit are shown in FIG. 8.

It may be understood that a signal obtained by placing reference signals may be understood as a data-domain signal. The data-domain signal herein may be understood as a signal before DFT transform processing in DFT-S-OFDM.

S603: The first device outputs N first time-domain signals corresponding to the N time units. Correspondingly, the second device receives the N first time-domain signals corresponding to the N time units.

The N first time-domain signals include reference signals in the N time units. In a possible implementation, the first device may first perform Fourier transform (that is, perform processing by using a transform-domain precoding module in FIG. 2) on a data-domain signal obtained by placing the reference signals in step S602, then perform mapping processing (that is, perform processing by using a subcarrier mapping module in FIG. 2) on a signal obtained through the Fourier transform, and finally perform inverse Fourier transform (that is, perform processing by using a DFT-S-OFDM symbol generation module in FIG. 2) on a signal obtained through the mapping processing, to obtain a time-domain signal. For ease of description, the time-domain signal is referred to as a second time-domain signal below. Further, the first device performs cyclic shift on corresponding second time-domain signals in N-1 time units after the zeroth time unit, to obtain N-1 third time-domain signals. Then the first device generates the N first time-domain signals based on a second time-domain signal corresponding to the zeroth time unit and the N-1 third time-domain signals. It should be noted that before the transform from the data-domain signal to the second time-domain signal is performed, the interval between the last reference signal in the previous time unit and the 1st reference signal in the subsequent time unit of any adjacent time units in the N time units is X, and after the transform from the data-domain signal to the second time-domain signal is performed, the interval between the last reference signal in the previous time unit and the 1st reference signal in the subsequent time unit of any adjacent time units in the N time units is $X*FFTsize/N_{RE}$. FFTsize represents a Fourier transform length, and $N_{RE}$ represents the transmission resource quantity, that is, a quantity of resource elements (resource elements, REs).

In some feasible implementations, that the first device generates the N first time-domain signals based on the second time-domain signal corresponding to the zeroth time unit and the N-1 third time-domain signals may be understood as follows: The first device adds a first CP to the second time-domain signal corresponding to the zeroth time unit to obtain a first time-domain signal corresponding to the zeroth time unit; and adds a second CP to the corresponding third time-domain signals in the N-1 time units to obtain N-1 first time-domain signals, to generate the N first time-domain signals. Therefore, the first device can output the generated N first time-domain signals. It should be noted that a length $L_{CP\_0}$ of the first CP and a length $L_{CP\_i}$ of the second CP corresponding to the $i^{th}$ time unit may be the same or different. Optionally, lengths of second CPs corresponding to different time units may be the same or different. This is not limited herein. The first CP is last $L_{CP\_0}$ signals of the second time-domain signal corresponding to the zeroth time unit, and the second CP corresponding to the $i^{th}$ time unit is last $L_{CP\_i}$ signals of the third time-domain signal corresponding to the $i^{th}$ time unit and obtained through a cyclic shift.

It may be understood that, when i=0, a cyclic shift length $U_0$ of the zeroth time unit is 0, or no cyclic shift is performed on the zeroth time unit.

When i>0:
In an implementation, a cyclic shift length $U_i$ of the $i^{th}$ time unit may be determined based on a cyclic shift length $U_{i-1}$ of an $(i-1)^{th}$ time unit and the transmission resource quantity $N_{RE}$.

Optionally, in another implementation, a cyclic shift length $U_i$ of the $i^{th}$ time unit may alternatively be determined based on a cyclic shift length $U_{i-1}$ of an $(i-1)^{th}$ time unit, the transmission resource quantity $N_{RE}$, a length $L_{CP\_i}$ of the $i^{th}$ time unit, and a quantity $a_i$ of reference signals in the $i^{th}$ time unit.

Optionally, in another implementation, a cyclic shift length $U_i$ of the $i^{th}$ time unit may alternatively be determined based on a cyclic shift length $U_{i-1}$ of an $(i-1)^{th}$ time unit, the transmission resource quantity $N_{RE}$, a length $L_{CP\_i}$ of the $i^{th}$ time

unit, a quantity $a_i$ of reference signals in the $i^{th}$ time unit, the Fourier transform length FFTsize, the position $Y_i$, within the $i^{th}$ time unit, of the $1^{st}$ reference signal in the $i^{th}$ time unit, and a position $Y_{i-1}$, within the $(i-1)^{th}$ time unit, of a $1^{st}$ reference signal in the $(i-1)^{th}$ time unit.

It should be noted that in this embodiment of this application, when the cyclic shift length $U_i$ of the $i^{th}$ time unit is a positive number, it indicates a left cyclic shift $U_i$ length; or when the cyclic shift length $U_i$ of the $i^{th}$ time unit is a negative number, it indicates a right cyclic shift $U_i$ length.

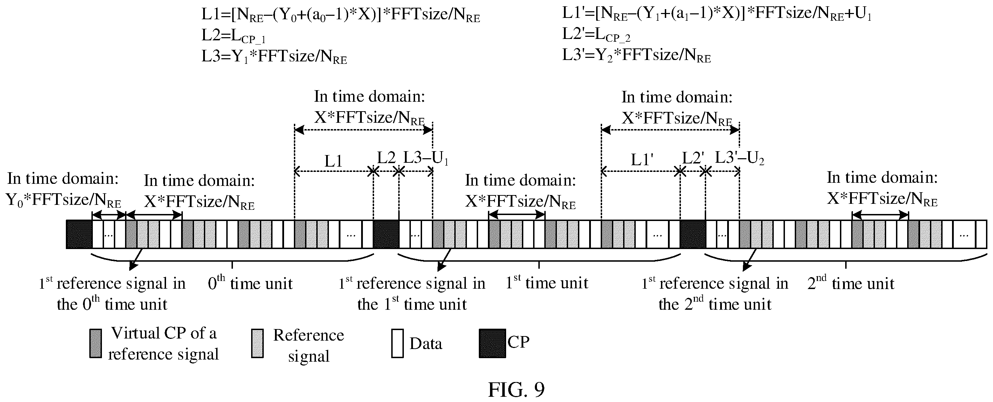

For example, FIG. 9 is a diagram of a scenario in which cyclic shift is performed on time-domain signals according to an embodiment of this application. As shown in FIG. 9:

When i=0, the cyclic shift length $U_0$ of the zeroth time unit is 0, or no cyclic shift is performed on the zeroth time unit. When i=1, in time domain, it needs to be ensured that an interval between a last reference signal in the zeroth time unit and a $1^{st}$ reference signal in the first time unit is $X*FFTsize/N_{RE}$. Therefore, a cyclic shift needs to be performed on a second time-domain signal corresponding to the first time unit. It is assumed that a cyclic shift corresponding to the first time unit is equal to $U_1$, as shown in FIG. 9. In this case, $L1+L2+(L3-U_1)=X*FFTsize/N_{RE}$ in FIG. 9. Therefore, $U_1=X*FFTsize/N_{RE}-L1-L2-L3$ can be deduced, where $L1=[N_{RE}-(Y_0+(a_0-1)*X)]*FFTsize/N_{RE}$, $L2=L_{CP\_1}$, and $L3=Y_1*FFTsize/N_{RE}$. Therefore, $U_1=(N_{RE}-Y_0-a_0X+Y_1)*FFTsize/N_{RE}+L_{CP\_1}$ can be determined.

When i=2, in time domain, it needs to be ensured that an interval between a last reference signal in the first time unit and a $1^{st}$ reference signal in a second time unit is $X*FFTsize/N_{RE}$. Therefore, a cyclic shift needs to be performed on a second time-domain signal corresponding to the second time unit. It is assumed that a cyclic shift corresponding to the second time unit is equal to $U_2$, as shown in FIG. 9. In this case, $L1'+L2'+(L3'-U_2)=X*FFTsize/N_{RE}$ in FIG. 9. Therefore, $U_2=X*FFTsize/N_{RE}-L1'-L2'-L3'$ can be deduced, where $L1'=[N_{RE}-(Y_1+(a_1-1)*X)]*FFTsize/N_{RE}+U_1$, $L2'=L_{CP\_2}$, and $L3'=Y_2*FFTsize/N_{RE}$. Therefore, $U_2=(N_{RE}-Y_1-a_1X+Y_2)*FFTsize/N_{PF}+L_{CP\_2}+U_1$ can be determined.

By analogy, when i=3, $U_3=(N_{RE}-Y_2-a_2X+Y_3)*FFTsize/N_{RE}+L_{CP\_3}+U_2$.

When i=4, $U_4=(N_{RE}-Y_3-a_3X+Y_4)*FFTsize/N_{RE}+L_{CP\_4}+U_3$.

Based on this, it may be determined that when i>0, the cyclic shift length $U_i$ of the $i^{th}$ time unit satisfies:

$$U_i=(N_{RE}-Y_{i-1}-a_{i-1}X+Y_i)*FFTsize/N_{RE}+L_{CP\_i}+U_{i-1},$$

where

$U_i$ represents the cyclic shift length of the $i^{th}$ time unit, $N_{RE}$ represents the transmission resource quantity, $Y_{i-1}$ is an offset value of the $1^{st}$ reference signal in the $(i-1)^{th}$ time unit relative to a start position of the $(i-1)^{th}$ time unit, $a_{i-1}$ represents the quantity of reference signals in the $(i-1)^{th}$ time unit, X represents the placement period of the reference signals, $Y_i$ is the offset value of the $1^{st}$ reference signal in the $i^{th}$ time unit relative to the start position of the $i^{th}$ time unit, FFTsize represents a Fourier transform length, $L_{CP\_i}$ represents a CP length of the $i^{th}$ time unit, and $U_{i-1}$ represents the cyclic shift length of the $(i-1)^{th}$ time unit.

For the second device, after the second device receives, from the first device, the N first time-domain signals corresponding to the N time units, the second device may perform channel estimation based on the reference signals in the N first time-domain signals. For example, the second device needs to first extract the reference signals from the N first time-domain signals based on the placement period X of the reference signals, the position $Y_i$, within the $i^{th}$ time unit, of the $1^{st}$ reference signal in the $i^{th}$ time unit, and the cyclic shift length $U_i$ of the $i^{th}$ time unit, and then perform channel estimation based on the extracted reference signals. Optionally, after the channel estimation is performed, equalization processing may be performed on a signal obtained by extracting the reference signals, and after the equalization processing, the signal is restored based on the cyclic shift length, and finally, an operation such as decoding is performed on the restored signal.

In this embodiment of this application, channel estimation performance in a high-speed moving scenario can be effectively improved by increasing density of reference signals in each time unit (that is, $a_i>1$) and ensuring that an interval between adjacent reference signals is a fixed value (that is, X).

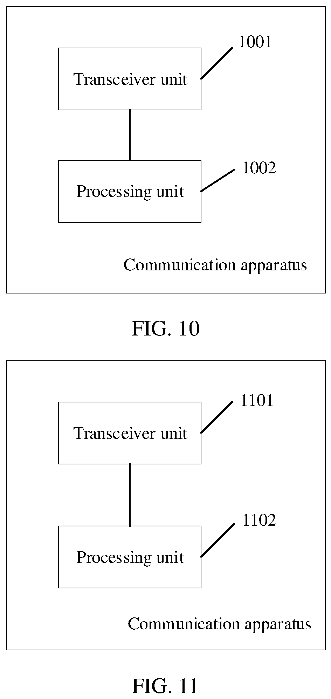

The following describes in detail communication apparatuses provided in this application with reference to FIG. 10 to FIG. 13.

It may be understood that in the foregoing implementations, to implement the foregoing functions, each device includes a corresponding hardware structure and/or software module for performing each function. A person skilled in the art should be easily aware that units and algorithm steps in the examples described with reference to the embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first device or the second device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that the module division in embodiments of this application is an example, and is merely logical function division. There may be another division manner in actual implementation.

FIG. 10 is a diagram of a structure of a communication apparatus according to an embodiment of this application. The communication apparatus shown in FIG. 10 may be configured to perform some or all functions of the first device in the method embodiment described in FIG. 6. The apparatus may be a first device, may be an apparatus in a first device, or may be an apparatus that can be used in combination with a first device. The communication apparatus may be a chip or a chip system. The communication apparatus shown in FIG. 10 may include a transceiver unit 1001 and a processing unit 1002. The processing unit 1002 is configured to perform data processing. The transceiver unit 1001 integrates a receiving unit and a sending unit. The transceiver unit 1001 may also be referred to as a communication unit. Alternatively, the transceiver unit 1001 may be split into a receiving unit and a sending unit. This also applies to the following processing unit 1002 and transceiver unit 1001. Details are not described again later.

The transceiver unit 1001 is configured to obtain a placement period X of reference signals, and a position $Y_i$, within an $i^{th}$ time unit, of a $1^{st}$ reference signal in the $i^{th}$ time unit, where X is an integer greater than 0, i={0, 1, 2, ..., N-1}, and N is an integer greater than 1.

The processing unit 1002 is configured to place $a_i$ reference signals in the $i^{th}$ time unit based on the placement period X and the position $Y_i$, where $a_i$ is an integer greater than 1, and an interval between a last reference signal in a previous time unit and a $1^{st}$ reference signal in a subsequent time unit of any adjacent time units in N time units is X.

The processing unit 1002 is configured to output N first time-domain signals corresponding to the N time units, where the N first time-domain signals include reference signals in the N time units.

In a possible implementation, before the outputting the N first time-domain signals corresponding to the N time units, the processing unit 1002 is further configured to:

perform cyclic shift on corresponding second time-domain signals in N-1 time units following a zeroth time unit, to obtain N-1 third time-domain signals, where a cyclic shift length $U_i$ of the $i^{th}$ time unit is determined based on a cyclic shift length $U_{i-1}$ of an $(i-1)^{th}$ time unit and a transmission resource quantity $N_{RE}$; and
generate the N first time-domain signals based on a second time-domain signal corresponding to the zeroth time unit and the N-1 third time-domain signals.

In a possible implementation, the cyclic shift length $U_i$ of the $i^{th}$ time unit is further determined based on a length $L_{CP\_i}$ of the $i^{th}$ time unit and a quantity $a_{i-1}$ of reference signals in the $(i-1)^{th}$ time unit.

In a possible implementation, when i=0, a cyclic shift length $U_0$ of the zeroth time unit is 0, or no cyclic shift is performed on the zeroth time unit.

In a possible implementation, when i>0, the cyclic shift length $U_i$ of the $i^{th}$ time unit satisfies:

$$U_i=(N_{RE}-Y_{i-1}-a_{i-1}X+Y_i)*FFTsize/N_{RE}+L_{CP\_i}+U_{i-1},$$

where
$U_i$ represents the cyclic shift length of the $i^{th}$ time unit, $N_{RE}$ represents the transmission resource quantity, $Y_{i-1}$ is an offset value of a $1^{st}$ reference signal in the $(i-1)^{th}$ time unit relative to a start position of the $(i-1)^{th}$ time unit, $a_{i-1}$ represents the quantity of reference signals in the $(i-1)^{th}$ time unit, X represents the placement period of the reference signals, $Y_i$ is an offset value of the $1^{st}$ reference signal in the $i^{th}$ time unit relative to a start position of the $i^{th}$ time unit, FFTsize represents a Fourier transform length, $L_{CP\_i}$ represents a CP length of the $i^{th}$ time unit, and $U_{i-1}$ represents the cyclic shift length of the $(i-1)^{th}$ time unit.

In a possible implementation, when generating the N first time-domain signals based on the second time-domain signal corresponding to the zeroth time unit and the N-1 third time-domain signals, the processing unit 1002 is configured to:

add a first CP to the second time-domain signal corresponding to the zeroth time unit to obtain a first time-domain signal corresponding to the zeroth time unit; and
add a second CP to the corresponding third time-domain signals in the N-1 time units to obtain N-1 first time-domain signals.

In a possible implementation, when obtaining the placement period X of the reference signals, and the position $Y_i$, within the $i^{th}$ time unit, of the $1^{st}$ reference signal in the $i^{th}$ time unit, the transceiver unit 1001 is configured to:

receive first indication information, where the first indication information indicates X and $Y_i$.

In a possible implementation, the processing unit 1002 is further configured to:

obtain information about a quantity of reference signals included in the $i^{th}$ time unit, where the quantity of reference signals is $a_i$.

In a possible implementation, the time unit is a symbol.

For other possible implementations of the communication apparatus, refer to related descriptions of the functions of the first device in the method embodiment corresponding to FIG. 6. Details are not described herein again.

FIG. 11 is a diagram of a structure of another communication apparatus according to an embodiment of this application. The communication apparatus shown in FIG. 11 may be configured to perform some or all functions of the second device in the method embodiment described in FIG. 6. The apparatus may be a second device, may be an apparatus in a second device, or may be an apparatus that can be used in combination with a second device. The communication apparatus may be a chip or a chip system. The communication apparatus shown in FIG. 11 may include a transceiver unit 1101 and a processing unit 1102.

The transceiver unit 1101 is configured to receive N first time-domain signals corresponding to N time units, where the N first time-domain signals include reference signals in the N time units, a first time-domain signal corresponding to an $i^{th}$ time unit is determined based on the $i^{th}$ time unit in which $a_i$ reference signals have been placed, and positions in which the $a_i$ reference signals are placed in the $i^{th}$ time unit are determined based on a placement period X of the reference signals, and a position $Y_i$, within the $i^{th}$ time unit, of a $1^{st}$ reference signal in the $i^{th}$ time unit, where X is an integer greater than 0, i={0, 2, ..., N-1}, N is an integer greater than 1, $a_i$ is an integer greater than 1, and an interval between a last reference signal in a previous time unit and a $1^{st}$ reference signal in a subsequent time unit of any adjacent time units in the N time units is X.

The processing unit 1102 is configured to perform channel estimation based on the reference signals in the N first time-domain signals.

In a possible implementation, before performing channel estimation based on the reference signals in the N first time-domain signals, the processing unit 1102 is further configured to:

extract the reference signals from the N first time-domain signals based on the placement period X of the reference signals, the position $Y_i$, within the $i^{th}$ time unit, of the $1^{st}$ reference signal in the $i^{th}$ time unit, and a cyclic shift length $U_i$ of the $i^{th}$ time unit.

In a possible implementation, the cyclic shift length $U_i$ of the $i^{th}$ time unit is further determined based on a length $L_{CP\_i}$ of the $i^{th}$ time unit and a quantity $a_{i-1}$ of reference signals in an $(i-1)^{th}$ time unit.

In a possible implementation, when i=0, a cyclic shift length $U_0$ of a zeroth time unit is 0, or no cyclic shift is performed on a zeroth time unit.

In a possible implementation, when i>0, the cyclic shift length $U_i$ of the $i^{th}$ time unit satisfies:

$$U_i=(N_{RE}-Y_{i-1}-a_{i-1}X+Y_i)*FFTsize/N_{RE}+L_{CP\_i}+U_{i-1},$$

where

$U_i$ represents the cyclic shift length of the $i^{th}$ time unit, $N_{RE}$ represents a transmission resource quantity, $Y_{i-1}$ is an offset value of a $1^{st}$ reference signal in the $(i-1)^{th}$ time unit relative to a start position of the $(i-1)^{th}$ time unit, $a_{i-1}$ represents the quantity of reference signals in the $(i-1)^{th}$ time unit, X represents the placement period of the reference signals, $Y_i$ is an offset value of the $1^{st}$ reference signal in the $i^{th}$ time unit relative to a start position of the $i^{th}$ time unit, FFTsize represents a Fourier transform length, $L_{CP\_i}$ represents a CP length of the $i^{th}$ time unit, and $U_{i-1}$ represents a cyclic shift length of the $(i-1)^{th}$ time unit.

In a possible implementation, the transceiver unit 1101 is further configured to:

send first indication information, where the first indication information indicates X and $Y_i$.

In a possible implementation, the time unit is a symbol.

For other possible implementations of the communication apparatus, refer to related descriptions of the functions of the second device in the method embodiment corresponding to FIG. 6. Details are not described herein again.

In a possible implementation, when the first device or the second device is a chip, the transceiver unit may be a communication interface, a pin, a circuit, or the like. The communication interface may be configured to input to-be-processed data into a processor, and may output a processing result of the processor to the outside. During specific implementation, the communication interface may be a general-purpose input/output (general purpose input output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing unit may be a processor. The processor may execute computer-executable instructions stored in a storage module, so that the chip performs the method in the embodiment in FIG. 6.

Further, the processor may include a controller, an arithmetic unit, and a register. For example, the controller is mainly responsible for decoding an instruction, and transmitting a control signal for an operation corresponding to the instruction. The arithmetic unit is mainly responsible for performing a fixed-point or floating-point arithmetic operation, a shift operation, a logic operation, and the like, and may also perform an address operation and address translation. The register is mainly responsible for saving register operands, intermediate operation results, and the like that are temporarily stored during instruction execution. During specific implementation, a hardware architecture of the processor may be an ASIC architecture, a microprocessor without interlocked pipeline stages (microprocessor without interlocked pipeline stages, MIPS) architecture, an advanced RISC machine (advanced RISC machine, ARM) architecture, a network processor (network processor, NP) architecture, or the like. The processor may be a single-core or multi-core processor.

The storage module may be an on-chip storage module, for example, a register or a cache. Alternatively, the storage module may be an off-chip storage module, for example, a ROM, another type of static storage device that can store static information and instructions, or a RAM.

It should be noted that a function corresponding to each of the processor and the interface may be implemented by using a hardware design, may be implemented by using a software design, or may be implemented by a combination of software and hardware. This is not limited herein.

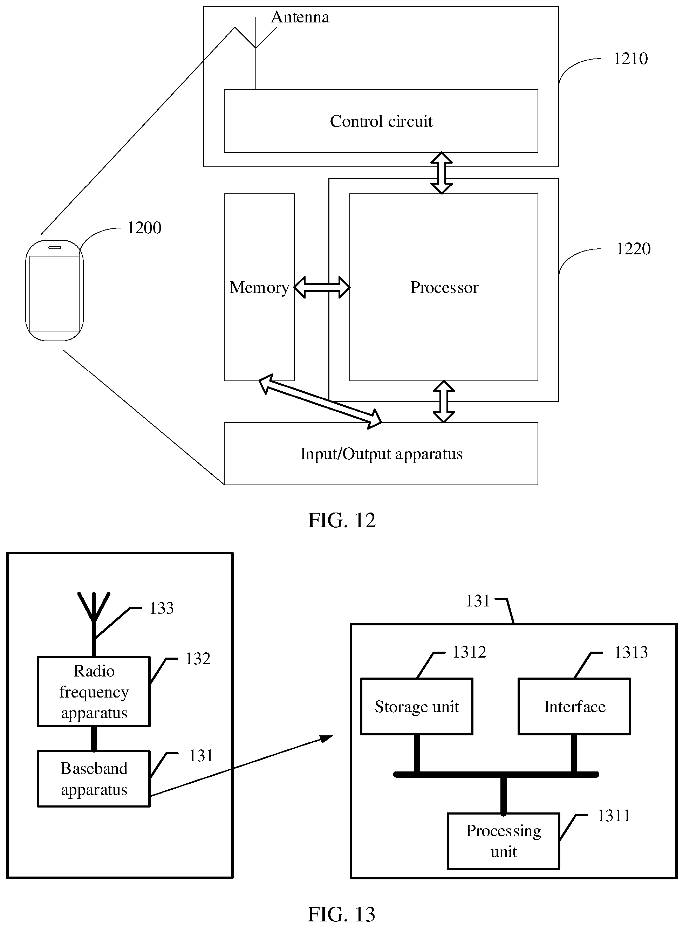

FIG. 12 is a diagram of a structure of another communication apparatus according to an embodiment of this application. As shown in FIG. 12, the communication apparatus may be the first device described in embodiments of this application, and is configured to implement the functions of the first device in FIG. 6. For example, the first device may be a terminal device. For ease of description, FIG. 12 shows only main components of the terminal device 1200. As shown in FIG. 12, the terminal device 1200 includes a processor, a memory, a control circuit, an antenna, and an input/output apparatus. The processor is mainly configured to process a communication protocol and communication data, control the entire terminal device 1200, execute a software program, and process data of the software program. The memory is mainly configured to store the software program and data. The control circuit is mainly configured to convert a baseband signal and a radio frequency signal and process the radio frequency signal. The antenna is mainly configured to receive and send a radio frequency signal in a form of an electromagnetic wave. The input/output apparatus, for example, a touchscreen, a display, a microphone, or a keyboard, is mainly configured to receive data input by a user and output data to the user.

For example, the terminal device 1200 is a mobile phone. After the terminal device 1200 is powered on, the processor may read a software program in a storage unit, interpret and execute instructions of the software program, and process data of the software program. When data needs to be sent in a wireless manner, the processor performs baseband processing on the to-be-sent data and then outputs a baseband signal to the control circuit. The control circuit performs radio frequency processing on the baseband signal and then sends out a radio frequency signal in a form of an electromagnetic wave by using the antenna. When data is sent to the terminal device 1200, the control circuit receives a radio frequency signal by using the antenna, converts the radio frequency signal into a baseband signal, and outputs the baseband signal to the processor. The processor converts the baseband signal into data and processes the data.

A person skilled in the art may understand that, for ease of description, FIG. 12 shows only one memory and one processor. In some embodiments, the terminal device 1200 may include a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and communication data. The central processing unit is mainly configured to control the entire terminal device 1200, execute the software program, and process the data of the software program. The processor in FIG. 12 integrates functions of the baseband processor and the central processing unit. A person skilled in the art may understand that the baseband processor and the central processing unit may also be independent processors, and are interconnected by using a technology such as a bus. The terminal device 1200 may include a plurality of baseband processors to adapt to different network standards. The terminal device 1200 may include a plurality of central processing units to enhance a processing capability of the terminal device 1200. Components of the terminal device 1200 may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 1210 of the terminal device 1200, and the processor that has a processing function may be considered as a processing unit 1220 of the terminal device 1200. As shown in FIG. 12, the terminal device 1200 includes the transceiver unit 1210 and the processing unit 1220. The transceiver unit may also be referred to as a transceiver, a transceiver device, a transceiver apparatus, or the like. Optionally, a component that is in the transceiver unit 1210 and that is configured to implement a receiving function may be considered as a receiving unit, and a component that is in the transceiver unit 1210 and that is configured to implement a sending function may be considered as a sending unit. In other words, the transceiver unit 1210 includes the receiving unit and the sending unit. For example, the receiving unit may also be referred to as a receiver, a receiving machine, or a receiving circuit, and the sending unit may also be referred to as a transmitter, a transmitting machine, or a transmitting circuit. The processing unit 1220 may also be referred to as a processor, a processing board, a processing apparatus, or the like.

FIG. 13 is a diagram of a structure of another communication apparatus according to an embodiment of this application. As shown in FIG. 13, the communication apparatus may be the second device described in embodiments of this application, and is configured to implement the functions of the second device in FIG. 6. For example, the second device may be a network device, and the network device includes a baseband apparatus 131, a radio frequency apparatus 132, and an antenna 133. In an uplink direction, the radio frequency apparatus 132 receives, by using the antenna 133, information sent by a terminal device, and sends, to the baseband apparatus 131, the information sent by the terminal device for processing. In a downlink direction, the baseband apparatus 131 processes information from the terminal device, and sends processed information to the radio frequency apparatus 132. The radio frequency apparatus 132 processes the information from the terminal device, and then sends processed information to the terminal device by using the antenna 133.

The baseband apparatus 131 includes one or more processing units 1311, a storage unit 1312, and an interface 1313. The processing unit 1311 is configured to support the network device in performing functions of the network device in the foregoing method embodiments. The storage unit 1312 is configured to store a software program and/or data. The interface 1313 is configured to exchange information with the radio frequency apparatus 132. The interface includes an interface circuit, configured to input and output information. In an implementation, the processing unit is an integrated circuit, for example, one or more ASICs, one or more DSPs, one or more FPGAs, or a combination of these integrated circuits. These integrated circuits may be integrated together to form a chip. The storage unit 1312 and the processing unit 1311 may be located on a same chip, that is, on-chip storage elements. Alternatively, the storage unit 1312 and the processing unit 1311 may be located on different chips, that is, off-chip storage elements. The storage unit 1312 may be one memory, or may be a general term for a plurality of memories or storage elements.

The network device may implement some or all of the steps in the foregoing method embodiments in a form of scheduling a program by using one or more processing units, for example, implement corresponding functions of a network device in FIG. 6. The one or more processing units may support radio access technologies of a same standard, or may support radio access technologies of different standards.

An embodiment of this application further provides a computer-readable storage medium. The computer-readable storage medium stores instructions. When the instructions are run on a processor, method procedures in the foregoing method embodiments are implemented.

An embodiment of this application further provides a computer program product. When the computer program product runs on a processor, method procedures in the foregoing method embodiments are implemented.

A person of ordinary skill in the art may be aware that units and steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into units is merely logical function division. Units described as separate components may or may not be physically separate, and components displayed as units may or may not be physical units, may be located in one position, or may be distributed on a plurality of network units. Some or all of the units may be selected depending on actual requirements, to achieve the objectives of the solutions in embodiments.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, or another magnetic storage device, or any other medium that can be used to carry or store expected program code in a form of an instruction or a data structure and that can be accessed by a computer. In addition, through illustrative but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct rambus random access memory (direct rambus RAM, DR RAM).

The foregoing descriptions are merely specific implementations of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A communication method, wherein the method comprises:

    obtaining a placement period X of reference signals, and a position $Y_i$, within an $i^{th}$ time unit, of a $1^{st}$ reference signal in the $i^{th}$ time unit, wherein X is an integer greater than 0, i={0, 1, 2, ..., N-1}, and N is an integer greater than 1;
    placing $a_i$ reference signals in the $i^{th}$ time unit based on the placement period X and the position $Y_i$, wherein $a_i$ is an integer greater than 1, and an interval between a last reference signal in a previous time unit and a $1^{st}$ reference signal in a subsequent time unit of any adjacent time units in N time units is X; and
    outputting N first time-domain signals corresponding to the N time units, wherein the N first time-domain signals comprise reference signals in the N time units.

2. The method according to claim 1, wherein before the outputting the N first time-domain signals corresponding to the N time units, the method further comprises:

    performing cyclic shift on corresponding second time-domain signals in N-1 time units following a zeroth time unit, to obtain N-1 third time-domain signals, wherein a cyclic shift length $U_i$ of the $i^{th}$ time unit is determined based on a cyclic shift length $U_{i-1}$ of an $(i-1)^{th}$ time unit and a transmission resource quantity $N_{RE}$; and
    generating the N first time-domain signals based on a second time-domain signal corresponding to the zeroth time unit and the N-1 third time-domain signals.

3. The method according to claim 2, wherein the cyclic shift length $U_i$ of the $i^{th}$ time unit is further determined based on a length $L_{CP\_i}$ of the $i^{th}$ time unit and a quantity $a_{i-1}$ of reference signals in the $(i-1)^{th}$ time unit.

4. The method according to claim 2 or 3, wherein when i=0, a cyclic shift length $U_0$ of the zeroth time unit is 0, or no cyclic shift is performed on the zeroth time unit.

5. The method according to any one of claims 2 to 4, wherein when i>0, the cyclic shift length $U_i$ of the $i^{th}$ time unit satisfies:

$$U_i=(N_{RE}-Y_{i-1}-a_{i-1}X+Y_i)*FFTsize/N_{RE}+L_{CP\_i}+U_{i-1},$$

wherein
$U_i$ represents the cyclic shift length of the $i^{th}$ time unit, $N_{RE}$ represents the transmission resource quantity, $Y_{i-1}$ is an offset value of a $1^{st}$ reference signal in the $(i-1)^{th}$ time unit relative to a start position of the $(i-1)^{th}$ time unit, $a_{i-1}$ represents the quantity of reference signals in the $(i-1)^{th}$ time unit, X represents the placement period of the reference signals, $Y_i$ is an offset value of the $1^{st}$ reference signal in the $i^{th}$ time unit relative to a start position of the $i^{th}$ time unit, FFTsize represents a Fourier transform length, $L_{CP\_i}$ represents a CP length of the $i^{th}$ time unit, and $U_{i-1}$ represents the cyclic shift length of the $(i-1)^{th}$ time unit.

6. The method according to any one of claims 2 to 5, wherein the generating the N first time-domain signals based on the second time-domain signal corresponding to the zeroth time unit and the N-1 third time-domain signals comprises:

    adding a first CP to the second time-domain signal corresponding to the zeroth time unit to obtain a first time-domain signal corresponding to the zeroth time unit; and
adding a second CP to the corresponding third time-domain signals in the N-1 time units to obtain N-1 first time-domain signals.

7. The method according to any one of claims 1 to 6, wherein the obtaining the placement period X of the reference signals, and the position $Y_i$, within the $i^{th}$ time unit, of the $1^{st}$ reference signal in the $i^{th}$ time unit comprises:
receiving first indication information indicative of X and $Y_i$.

8. The method according to any one of claims 1 to 7, wherein the method further comprises:
obtaining information about a quantity of reference signals comprised in the $i^{th}$ time unit, wherein the quantity of reference signals is $a_i$.

9. A communication method, wherein the method comprises:

receiving N first time-domain signals corresponding to N time units, wherein the N first time-domain signals comprise reference signals in the N time units, a first time-domain signal corresponding to an $i^{th}$ time unit is determined based on the $i^{th}$ time unit in which $a_i$ reference signals have been placed, and positions in which the $a_i$ reference signals are placed in the $i^{th}$ time unit are determined based on a placement period X of the reference signals, and a position $Y_i$, within the $i^{th}$ time unit, of a $1^{st}$ reference signal in the $i^{th}$ time unit, wherein X is an integer greater than 0, i={0, 2, ..., N-1}, N is an integer greater than 1, $a_i$ is an integer greater than 1, and an interval between a last reference signal in a previous time unit and a $1^{st}$ reference signal in a subsequent time unit of any adjacent time units in the N time units is X; and
performing channel estimation based on the reference signals in the N first time-domain signals.

10. The method according to claim 9, wherein before the performing channel estimation based on the reference signals in the N first time-domain signals, the method further comprises:
extracting the reference signals from the N first time-domain signals based on the placement period X of the reference signals, the position $Y_i$, within the $i^{th}$ time unit, of the $1^{st}$ reference signal in the $i^{th}$ time unit, and a cyclic shift length $U_i$ of the $i^{th}$ time unit.

11. The method according to claim 10, wherein the cyclic shift length $U_i$ of the $i^{th}$ time unit is further determined based on a length $L_{CP\_i}$ of the $i^{th}$ time unit and a quantity $a_{i-1}$ of reference signals in an $(i-1)^{th}$ time unit.

12. The method according to claim 10 or 11, wherein when i=0, a cyclic shift length $U_0$ of a zeroth time unit is 0, or no cyclic shift is performed on a zeroth time unit.

13. The method according to any one of claims 10 to 12, wherein when i>0, the cyclic shift length $U_i$ of the $i^{th}$ time unit satisfies:

$$U_i=(N_{RE}-Y_{i-1}-a_{i-1}X+Y_i)*FFTsize/N_{RE}+L_{CP\_i}+U_{i-1},$$

wherein
$U_i$ represents the cyclic shift length of the $i^{th}$ time unit, $N_{RE}$ represents a transmission resource quantity, $Y_{i-1}$ is an offset value of a $1^{st}$ reference signal in the $(i-1)^{th}$ time unit relative to a start position of the $(i-1)^{th}$ time unit, $a_{i-1}$ represents the quantity of reference signals in the $(i-1)^{th}$ time unit, X represents the placement period of the reference signals, $Y_i$ is an offset value of the $1^{st}$ reference signal in the $i^{th}$ time unit relative to a start position of the $i^{th}$ time unit, FFTsize represents a Fourier transform length, $L_{CP\_i}$ represents a CP length of the $i^{th}$ time unit, and $U_{i-1}$ represents a cyclic shift length of the $(i-1)^{th}$ time unit.

14. The method according to any one of claims 9 to 13, wherein the method further comprises:
sending first indication information indicative of X and $Y_i$.

15. A communication apparatus, wherein the apparatus comprises:

a transceiver unit, configured to obtain a placement period X of reference signals, and a position $Y_i$, within an $i^{th}$ time unit, of a $1^{st}$ reference signal in the $i^{th}$ time unit, wherein X is an integer greater than 0, i={0, 1, 2, ..., N-1}, and N is an integer greater than 1; and

a processing unit, configured to place $a_i$ reference signals in the $i^{th}$ time unit based on the placement period X and the position $Y_i$, wherein $a_i$ is an integer greater than 1, and an interval between a last reference signal in a previous time unit and a $1^{st}$ reference signal in a subsequent time unit of any adjacent time units in N time units is X, wherein the processing unit is configured to output N first time-domain signals corresponding to the N time units, wherein the N first time-domain signals comprise reference signals in the N time units.

16. The apparatus according to claim 15, wherein before outputting the N first time-domain signals corresponding to the N time units, the processing unit is further configured to:

perform cyclic shift on corresponding second time-domain signals in N-1 time units following a zeroth time unit, to obtain N-1 third time-domain signals, wherein a cyclic shift length $U_i$ of the $i^{th}$ time unit is determined based on a cyclic shift length $U_{i-1}$ of an $(i-1)^{th}$ time unit and a transmission resource quantity $N_{RE}$; and
generate the N first time-domain signals based on a second time-domain signal corresponding to the zeroth time unit and the N-1 third time-domain signals.

17. The apparatus according to claim 16, wherein the cyclic shift length $U_i$ of the $i^{th}$ time unit is further determined based on a length $L_{CP\_i}$ of the $i^{th}$ time unit and a quantity $a_{i-1}$ of reference signals in the $(i-1)^{th}$ time unit.

18. The apparatus according to claim 16 or 17, wherein when i=0, a cyclic shift length $U_0$ of the zeroth time unit is 0, or no cyclic shift is performed on the zeroth time unit.

19. The apparatus according to any one of claims 16 to 18, wherein when i>0, the cyclic shift length $U_i$ of the $i^{th}$ time unit satisfies:

$$U_i=(N_{RE}-Y_{i-1}-a_{i-1}X+Y_i)*FFTsize/N_{RE}+L_{CP\_i}+U_{i-1},$$

wherein
$U_i$ represents the cyclic shift length of the $i^{th}$ time unit, $N_{RE}$ represents the transmission resource quantity, $Y_{i-1}$ is an offset value of a $1^{st}$ reference signal in the $(i-1)^{th}$ time unit relative to a start position of the $(i-1)^{th}$ time unit, $a_{i-1}$ represents the quantity of reference signals in the $(i-1)^{th}$ time unit, X represents the placement period of the reference signals, $Y_i$ is an offset value of the $1^{st}$ reference signal in the $i^{th}$ time unit relative to a start position of the $i^{th}$ time unit, FFTsize represents a Fourier transform length, $L_{CP\_i}$ represents a CP length of the $i^{th}$ time unit, and $U_{i-1}$ represents the cyclic shift length of the $(i-1)^{th}$ time unit.

20. The apparatus according to any one of claims 16 to 19, wherein when generating the N first time-domain signals based on the second time-domain signal corresponding to the zeroth time unit and the N-1 third time-domain signals, the processing unit is configured to:

add a first CP to the second time-domain signal corresponding to the zeroth time unit to obtain a first time-domain signal corresponding to the zeroth time unit; and
add a second CP to the corresponding third time-domain signals in the N-1 time units to obtain N-1 first time-domain signals.

21. The apparatus according to any one of claims 15 to 20, wherein when obtaining the placement period X of the reference signals, and the position $Y_i$, within the $i^{th}$ time unit, of the $1^{st}$ reference signal in the $i^{th}$ time unit, the transceiver unit is configured to:
receive first indication information indicative of X and $Y_i$.

22. The apparatus according to any one of claims 15 to 21, wherein the processing unit is further configured to:
obtain information about a quantity of reference signals comprised in the $i^{th}$ time unit, wherein the quantity of reference signals is $a_i$.

23. A communication apparatus, wherein the apparatus comprises:

a transceiver unit, configured to receive N first time-domain signals corresponding to N time units, wherein the N first time-domain signals comprise reference signals in the N time units, a first time-domain signal corresponding to an $i^{th}$ time unit is determined based on the $i^{th}$ time unit in which $a_i$ reference signals have been placed, and positions in which the $a_i$ reference signals are placed in the $i^{th}$ time unit are determined based on a placement period X of the reference signals, and a position $Y_i$, within the $i^{th}$ time unit, of a $1^{st}$ reference signal in the $i^{th}$ time unit, wherein X is an integer greater than 0, i={0, 2, ..., N-1}, N is an integer greater than 1, $a_i$ is an integer greater than 1, and an interval between a last reference signal in a previous time unit and a $1^{st}$ reference signal in a subsequent time unit of any adjacent time units in the N time units is X; and

a processing unit, configured to perform channel estimation based on the reference signals in the N first time-domain signals.

24. The apparatus according to claim 23, wherein before performing channel estimation based on the reference signals in the N first time-domain signals, the processing unit is further configured to:
extract the reference signals from the N first time-domain signals based on the placement period X of the reference signals, the position $Y_i$, within the $i^{th}$ time unit, of the $1^{st}$ reference signal in the $i^{th}$ time unit, and a cyclic shift length $U_i$ of the $i^{th}$ time unit.

25. The apparatus according to claim 24, wherein the cyclic shift length $U_i$ of the $i^{th}$ time unit is further determined based on a length $L_{CP\_i}$ of the $i^{th}$ time unit and a quantity $a_{i-1}$ of reference signals in an $(i-1)^{th}$ time unit.

26. The apparatus according to claim 24 or 25, wherein when i=0, a cyclic shift length $U_0$ of a zeroth time unit is 0, or no cyclic shift is performed on a zeroth time unit.

27. The apparatus according to any one of claims 24 to 26, wherein when i>0, the cyclic shift length $U_i$ of the $i^{th}$ time unit satisfies:

$$U_i=(N_{RE}-Y_{i-1}-a_{i-1}X+Y_i)*FFTsize/N_{RE}+L_{CP\_i}+U_{i-1},$$

wherein
$U_i$ represents the cyclic shift length of the $i^{th}$ time unit, $N_{RE}$ represents a transmission resource quantity, $Y_{i-1}$ is an offset value of a $1^{st}$ reference signal in the $(i-1)^{th}$ time unit relative to a start position of the $(i-1)^{th}$ time unit, $a_{i-1}$ represents the quantity of reference signals in the $(i-1)^{th}$ time unit, X represents the placement period of the reference signals, $Y_i$ is an offset value of the $1^{st}$ reference signal in the $i^{th}$ time unit relative to a start position of the $i^{th}$ time unit, FFTsize represents a Fourier transform length, $L_{CP\_i}$ represents a CP length of the $i^{th}$ time unit, and $U_{i-1}$ represents a cyclic shift length of the $(i-1)^{th}$ time unit.

28. The apparatus according to any one of claims 23 to 27, wherein the transceiver unit is further configured to:
send first indication information indicative of X and $Y_i$.

29. A communication apparatus, comprising:

a processor; and
one or more memories, wherein
the memory is configured to store a computer program, and the processor is configured to execute the computer program stored in the memory, so that the method according to any one of claims 1 to 8 is performed, or that the method according to any one of claims 9 to 14 is performed.

30. A computer-readable storage medium, wherein the storage medium stores a computer program or instructions, and when the computer program or instructions are executed by a computer, the method according to any one of claims 1 to 8 is implemented, or the method according to any one of claims 9 to 14 is implemented.

31. A computer program product, comprising computer program code, wherein when the computer program code is run on a computer, the method according to any one of claims 1 to 8 is implemented, or the method according to any one of claims 9 to 14 is implemented.

32. A chip or a chip system, comprising an input/output interface and a processing circuit, wherein the input/output interface is configured to exchange information or data, and the processing circuit is configured to run instructions, so that an apparatus in which the chip or the chip system is installed is enabled to perform the method according to any one of claims 1 to 8, or perform the method according to any one of claims 9 to 14.

FIG. 1

Coded bit stream → Modulation → Time-domain resource mapping → Transform-domain precoding → Subcarrier mapping → DFT-S-OFDM SYMBOL GENERATION → To intermediate/radio frequency

Reference signal

FIG. 2

Modulation: modulation
S/P: serial-to-parallel conversion
DFT: discrete Fourier transform
IFFT: inverse fast Fourier
transformation
P/S: parallel-to-serial conversion
CP: cyclic prefix

Add a CP

Pad 0

Pad 0

Coded bit
stream

Modulation

S/P

DFT

IFFT

P/S

FIG. 3

FIG. 4

CP: cyclic prefix

Pre-DFT-DMRS: pre-Fourier transform-demodulation reference signal

Virtual CP

CP

Pre-DFT-DMRS

Symbol

FIG. 5

| First device | | Second device |

S601: Obtain a placement period X of reference signals, and a position $Y_i$, within an $i^{th}$ time unit, of a $1^{st}$ reference signal in the $i^{th}$ time unit

S602: Place a reference signals in the $i^{th}$ time unit based on the placement period X and the position $Y_i$

S603: Output N first time-domain signals corresponding to N time units

FIG. 6

$Y_0=3$   $X=5$

$Y_1=3$   $X=5$

$0^{th}$ time unit

$1^{st}$ time unit

▮ Virtual CP of a
reference signal

▯ Reference
signal

▯ Data

FIG. 7

$Y_0=3$   $X=5$

$Y_1=4$   $X=5$

$0^{th}$ time unit

$1^{st}$ time unit

▮ Virtual CP of a
reference signal

▯ Reference
signal

▯ Data

FIG. 8

$L1=[N_{RE}-(Y_0+(a_0-1)*X)]*FFTsize/N_{RE}$
$L2=L_{CP\_1}$
$L3=Y_1*FFTsize/N_{RE}$

$L1'=[N_{RE}-(Y_1+(a_1-1)*X)]*FFTsize/N_{RE}+U_1$
$L2'=L_{CP\_2}$
$L3'=Y_2*FFTsize/N_{RE}$

In time domain:
$X*FFTsize/N_{RE}$

In time domain:
$X*FFTsize/N_{RE}$

L1    L2 L3–$U_1$

L1'    L2' L3'–$U_2$

In time domain:
$Y_0*FFTsize/N_{RE}$

In time domain:
$X*FFTsize/N_{RE}$

In time domain:
$X*FFTsize/N_{RE}$

In time domain:
$X*FFTsize/N_{RE}$

$1^{st}$ reference signal in
the $0^{th}$ time unit

$0^{th}$ time unit

$1^{st}$ reference signal in
the $1^{st}$ time unit

$1^{st}$ time unit

$1^{st}$ reference signal in
the $2^{nd}$ time unit

$2^{nd}$ time unit

▓ Virtual CP of a
reference signal

▓ Reference
signal

☐ Data

■ CP

FIG. 9

FIG. 10

FIG. 11

FIG. 12

FIG. 13

## INTERNATIONAL SEARCH REPORT

International application No.

**PCT/CN2023/074044**

### A. CLASSIFICATION OF SUBJECT MATTER

H04L25/02(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT; VEN; CNKI; ENTXT; 3GPP: 插入, 放置, 参考信号, 时间单元, 时隙, 子帧, 符号, 位置, 周期, 间隔, 相邻, 循环移位, insert+, plac+, reference signal, RS, DMRS, PTRS, time unit, slot, subframe, symbol, position, period, interval, cyclic shift

### C. DOCUMENTS CONSIDERED TO BE RELEVANT

| Category* | Citation of document, with indication, where appropriate, of the relevant passages | Relevant to claim No. |
|---|---|---|
| A | CN 115550119 A (HUAWEI TECHNOLOGIES CO., LTD.) 30 December 2022 (2022-12-30) claims 1-20, and description, paragraphs [0099]-[0405] | 1-32 |
| A | WO 2021217382 A1 (HUAWEI TECHNOLOGIES CO., LTD.) 04 November 2021 (2021-11-04) entire document | 1-32 |
| A | MITSUBISHI ELECTRIC CORP. "UL PTRS for DFTsOFDM Waveform" *3GPP TSG-RAN NR AH#2, R1-1710230*, 16 June 2017 (2017-06-16), pages 1-10 | 1-32 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 September 2023** | **06 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/074044** |

| Patent document cited in search report | | | Publication date (day/month/year) | Patent family member(s) | Publication date (day/month/year) |
| --- | --- | --- | --- | --- | --- |
| CN | 115550119 | A | 30 December 2022 | None | |
| WO | 2021217382 | A1 | 04 November 2021 | None | |

Form PCT/ISA/210 (patent family annex) (July 2022)